# EUROPEAN PATENT APPLICATION

(11) **EP 0 707 127 A1**
(43) Date of publication of application: **17.04.1996**
(21) Application number: 94307506.9
(22) Date of filing: 13.10.1994
(51) Int. Cl.: E06B 9/262, B60J 1/20

(54) **Accordion sun shielding device**

(71) Applicant: Lin, Yung-Chin, Yung-Kang Hsiang Tainan Hsien (TW)
(72) Inventor: Lin, Yung-Chin, Yung-Kang Hsiang Tainan Hsien (TW)
(74) Representative: Jackson, Peter Arthur

(57) **Abstract**

An accordion sun shielding device (2) includes a plurality of elongated accordion plates (21) connected to one another in an juxtaposed relationship. Each of the accordion plates (21) has first and second holes (221, 222). The leftmost accordion plate (211) has at least one aperture (231, 232) formed between the first and second holes (221, 222). A first thread (41) has a first end connected to the rightmost accordion plate (212), and a second end connected to one of the two second engaging members (51, 52) which are provided near the leftmost accordion plate (211). The first thread (41) passes through the first holes (221), the at least one aperture (231, 232), and one of the second holes (222) in the leftmost accordion plate (211). A second thread (42) has a first end connected to the rightmost accordion plate (212), and a second end of the second thread (42) being connected to the other one of the two second engaging members (51, 52). The second thread (42) passes through the second holes (222), the at least one aperture (231, 232), and one of the first holes (221) in the leftmost accordion plate (211).

## Description

This invention relates to a sun shielding device, more particularly to an accordion sun shielding device which has a plurality of accordion plates connected to one another in an juxtaposed relationship.

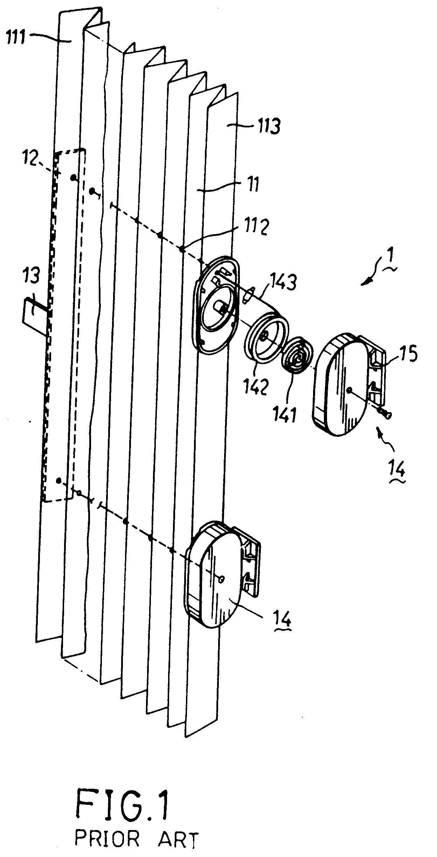

Figure 1 shows a conventional accordion sun shielding device 1. The conventional accordion sun shielding device includes a plurality of accordion plates 11 connected to one another in an juxtaposed relationship. Each of the accordion plates 11 has first and second holes 112 which are adjacent to the ends of each of the accordion plates 11, respectively. The leftmost accordion plate 111 of the accordion plates 111 is provided with a VELCRO tape 12 and a pull tab 13. The rightmost accordion plate 113 of the accordion plates 11 is provided with two winding mechanisms 14.

Each of the winding mechanisms 14 has a coil spring 141 and a reel 142 mounted therein. The reel 142 has a nylon thread 143 wound therearound. One end of the nylon thread 143 is secured to the reel 142 and the other end of the nylon thread 143 passes through either the first or the second holes 112 of the accordion plates 11 and connects to the leftmost accordion plate 111. Therefore, the winding mechanism 14 can retract normally the accordion plates 11 by means of the rewinding force of the coil spring 141.

Each of the winding mechanism 14 has a adhesive tape 15 provided thereto so that the winding mechanism 14 and thereby the conventional accordion sun shielding device 1 can be attached to a panel of glass.

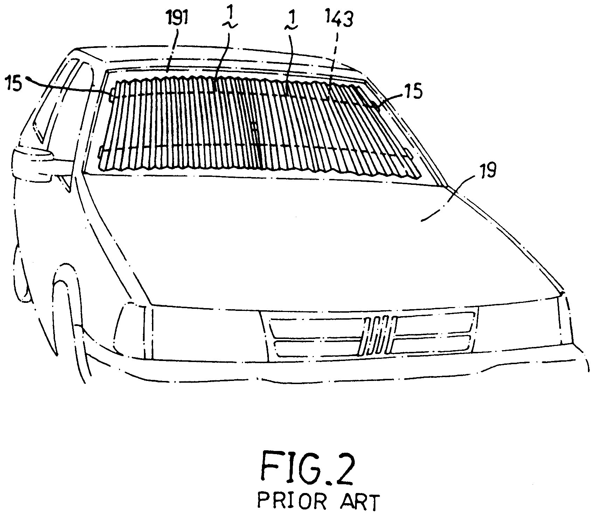

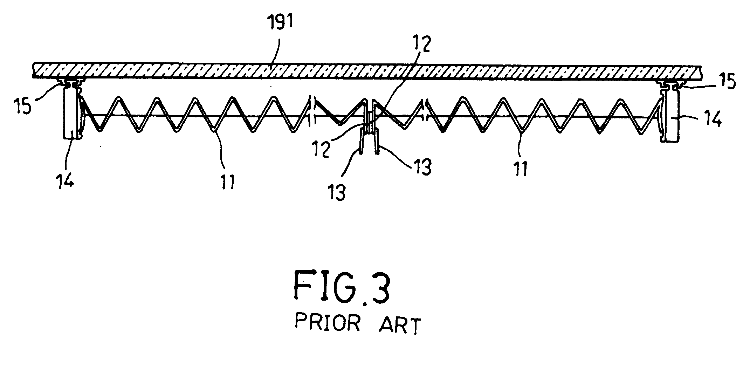

In use, two sets of the conventional accordion sun shielding devices 1 may be mounted respectively on both ends of the windshield glass 191 inside an automobile 19 by attaching the adhesive tapes 15 to the windshield glass 191, as shown in figures 2 and 3. The two sets of the conventional accordion sun devices 1 can be unfolded to shield the windshield glass 191 by pulling the pull tabs 13 toward each other against the rewinding force of the coil spring 141s of the winding mechanisms 14 in order to allow the hooks and loops fasteners 12 to engage one another, as best illustrated in figure 3.

However, it is now found that such a conventional accordion sun shielding device 1 suffers from the following disadvantages:
(1) The structure of the conventional accordion sun shielding device 1 is complicated and the manufacturing costs are high.
(2) In use, the two sets of conventional accordion sun shielding devices 1 must be pulled toward each other to the middle portion of the windshield glass in order to position them together. Therefore, the shielding area of the two conventional accordion sun shielding devices 1 is fixed when the conventional accordion sun shielding devices 1 are connected together.

It is therefore a main object of this invention to provide an accordion sun shielding device which is simple in structure and can be economically manufactured.

It is another object of this invention to provide an accordion sun shielding device in which the shielding area can be varied when the accordion sun shielding device is unfolded.

Accordingly, the accordion sun shielding device of this invention comprises:
a plurality of elongated accordion plates connected to one another in an juxtaposed relationship and including a leftmost accordion plate and a rightmost accordion plate, each of the accordion plates having first and second holes formed respectively adjacent to the end portions of each of the accordion plates, the leftmost accordion plate further having at least one aperture formed between the first and second holes of the leftmost accordion plate;
two first engaging members connected respectively adjacent to the first and second holes of the rightmost accordion plate, the two first engaging members being adapted to be detachably adhered to a panel of glass;
two second engaging members adapted to be detachably adhered to a panel of glass;
a first thread having a first end and a second end, the first end of the first thread being connected to the rightmost accordion plate, and the second end of the first thread being connected to one of the two second engaging members, the first thread passing through the first holes, the at least one aperture, and one of the second holes in the leftmost accordion plate; and
a second thread having a first end and a second end, the first end of the second thread being connected to the rightmost accordion plate, and the second end of the second thread being connected to the other one of the two second engaging members, the second thread passing through the second holes, the at least one aperture, and one of the first holes in the leftmost accordion plate.

Other features and advantages of this invention will become apparent in the following detailed description of the preferred embodiments of this invention with reference to the accompanying drawings.

Figure 1 is a perspective exploded view of a conventional accordion sun shielding device.

Figure 2 is a schematic view illustrating two sets of the conventional accordion sun shielding devices being mounted to a windshield glass of an automobile.

Figure 3 is a fragmentary sectional top view illustrating two sets of the conventional accordion sun shielding devices being mounted to the windshield glass of figure 2.

Figure 4 is a perspective schematic view illustrating a first preferred embodiment of an accordion sun shielding device of this invention being mounted to a panel of glass in a fully unfolded position.

Figure 5 is a fragmentary perspective enlarged view illustrating the first and second threads passing the leftmost according plate at the left side of the accordion sun shielding device of figure 4.

Figure 6 is a perspective schematic view illustrating the first preferred embodiment of the accordion sun shielding device of this invention being mounted to a panel of glass in an partially unfolded position.

Figure 7 is a perspective schematic view illustrating the first preferred embodiment of the accordion sun shielding device of this invention being mounted to a panel of glass in a fully folded position.

Figure 8 is a perspective schematic view illustrating a second preferred embodiment of an accordion sun shielding device of this invention in a fully-unfolded position.

Figure 9 is a perspective exploded view of an alternative embodiment of a second engaging member of the accordion sun shielding device of this invention.

Figure 10 is a fragmentary sectional top view illustrating the second engaging member of the accordion sun shielding device of figure 9 being mounted to a panel of glass.

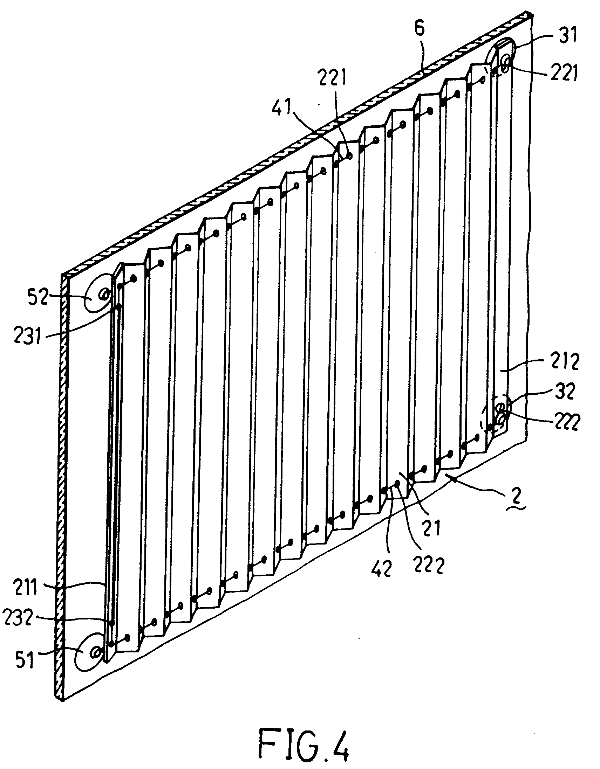

Referring to figure 4, a first preferred embodiment of an accordion sun shielding device 2 of this invention is shown to include a plurality of elongated accordion plates 21 connected to one another in an juxtaposed relationship. The accordion plates 21 includes a leftmost accordion plate 211 and a rightmost accordion plate 212 which are made of a thicker and harder material, such as a hard plastic material. The remaining of the accordion plates 21 may be made of a thinner and softer material, such as paper and plastic material or other suitable sun shielding material. Each of the accordion plates 21 has first and second holes 221 and 222 formed respectively adjacent to the end portions of each of the accordion plates 21. The leftmost accordion plate 211 further has an upper aperture 231 and a lower aperture 232 formed between and near the first and second holes 221 and 222, respectively.

Two first engaging members 31, 32 are connected respectively to the first and second holes 221 and 222 of the rightmost accordion plate 212. In this embodiment, the two first engaging members 31, 32 are an upper suction cup 31 and a lower suction cup 32 which are adapted to be adhered detachably to a panel of glass 6, as best illustrated in figure 4. The engaging members 31 and 31 may be other suitable locating members, such as double side adhesive tape The panel of glass 6 may be a panel of windshield glass of an automobile or a panel of window glass.

Two second engaging members 51 and 52 are also provided for detachably adhering to the panel of glass 6. In this embodiment, the two second engaging members 51 and 52 are an upper suction cup 52 and a lower suction cup 51.

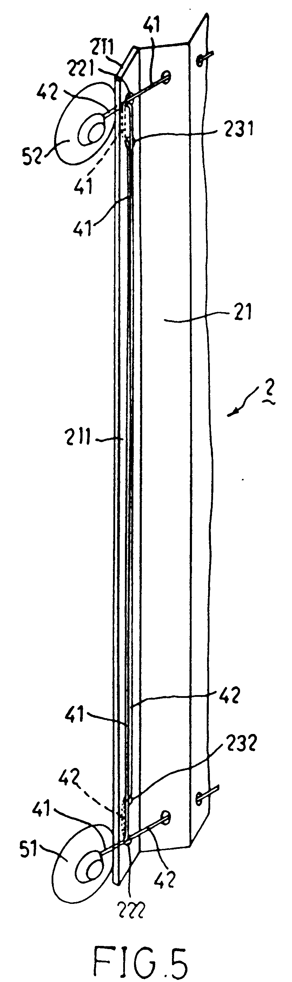

A first thread 41 has a first end which is connected to the upper suction cup 31 and is therefore connected to the rightmost accordion plate 212, and a second end connected to the lower suction cup 51. The first thread 41 passes through the first holes 221, the upper aperture 231, and the second hole 222 in the leftmost accordion plate 211, as best illustrated in figure 5.

Similarly, a second thread 42 has a first end which is connected to the lower suction cup 32 and is therefore connected to the rightmost accordion plate 212, and a second end connected to the upper suction cup 52. The second thread 42 passes through the second holes 222, the lower aperture 232, and the first hole 221 in the leftmost accordion plate 211, as shown in figure 5.

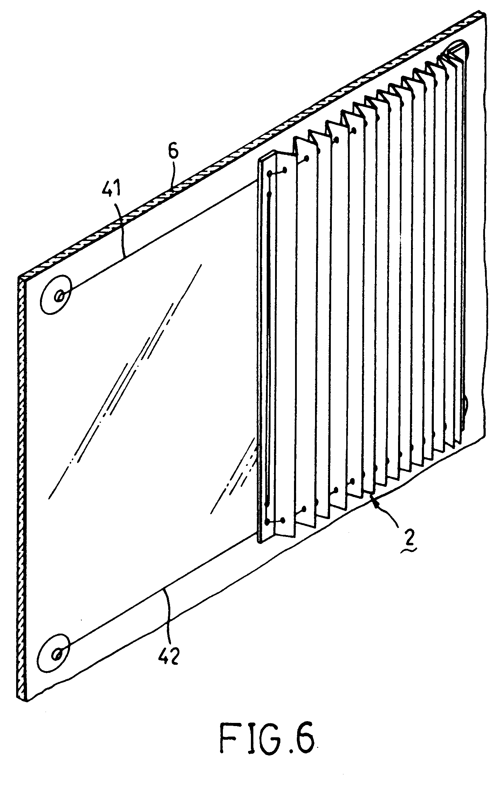

Preferably, the first and second threads 41, 42 are made of nylon in order to facilitate the smooth slide of the accordion plates 21 along the first and second threads 41, 42. Therefore, the accordion sun shielding device can be easily and smoothly folded and unfolded. It is noted that the friction force between the first and second threads 41, 42 and the leftmost accordion plate 211 is increased by passing the first and second threads 41, 42 respectively through the upper and lower apertures 231, 232. That is to say, the friction force between the leftmost accordion plate 211 and the first and second threads 41, 42 is greater than that between the remaining of the accordion plate 21 and the first and second threads 41, 42, when the first and second threads 41, 42 are stretched in tension. Therefore, the leftmost accordion plate 211 can be positioned frictionally along the first and second threads 41, 42 at a desired location. For example, the leftmost accordion plate 211 can be positioned frictionally at the middle portion of the first and second threads 41, 42 by simply pushing the leftmost accordion plate 211 from left to right against the friction force between the leftmost accordion plate 211 and the first and second threads 41, 42, as best illustrated in figure 6.

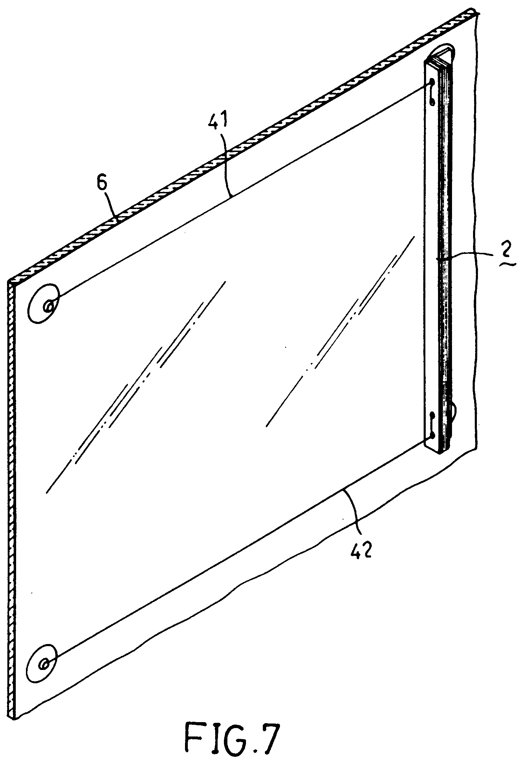

Alternatively, the leftmost accordion plate 211 can be pushed to the rightmost position in order to fully folded the accordion sun shielding device 2, as best illustrated in figure 7. Therefore, the shielding area of the accordion sun shielding device 2 can be varied as desired by moving the leftmost accordion plate 211.

In use, the first engaging members 31, 32 and the second engaging members 51, 52 are attached the glass panel 6 so that the first and second threads 41, 42 can be stretched in tension. The leftmost accordion plate 211 can be moved along the first and second threads 41, 42 and positioned frictionally at a desired position as described hereinbefore. The friction force between the leftmost accordion plate 211 and the first and second threads 41, 42 is proportional to the tension force of the first and second threads 41, 42.

In practice, the first and second threads 41, 42 may pass through the first and second holes 221, 222 of the leftmost accordion plate 211 and the upper and lower apertures 231, 232 in different manners. For example, the first thread 41 can pass through the first hole 221, the upper and lower apertures 231, 232 and the second hole 222. In general, the greater the number of the holes and apertures the first and second threads 41, 42 pass through, the greater the friction force-between the leftmost accordion plate 211 and the first and second threads 41, 42.

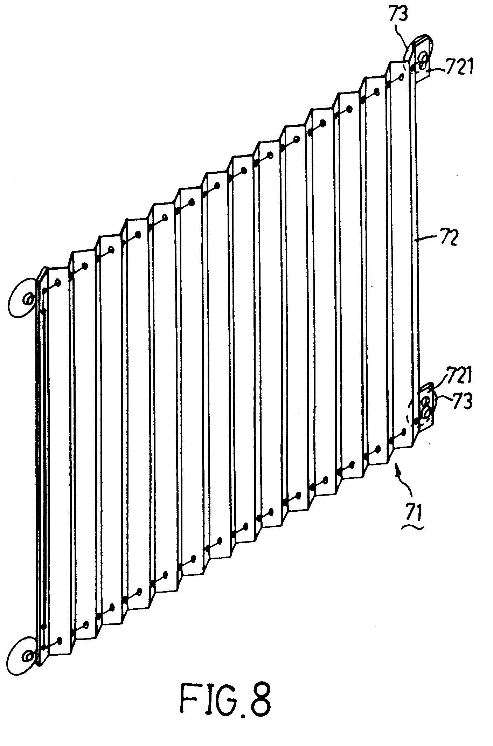

Figure 8 shows an alternative embodiment of the accordion sun shielding device of this invention. In this embodiment, the structure of the accordion sun shielding device is similar to that of the accordion sun shielding device of the first embodiment except that the rightmost accordion plate 71 has two tab members 72 formed respectively near the upper and lower ends of the rightmost accordion plate 71. Each of the tab members 72 has a mounting hole 721 formed therein. The two first engaging members 73 are respectively and detachably mounted in the mounting holes 721 of the tab members 72.

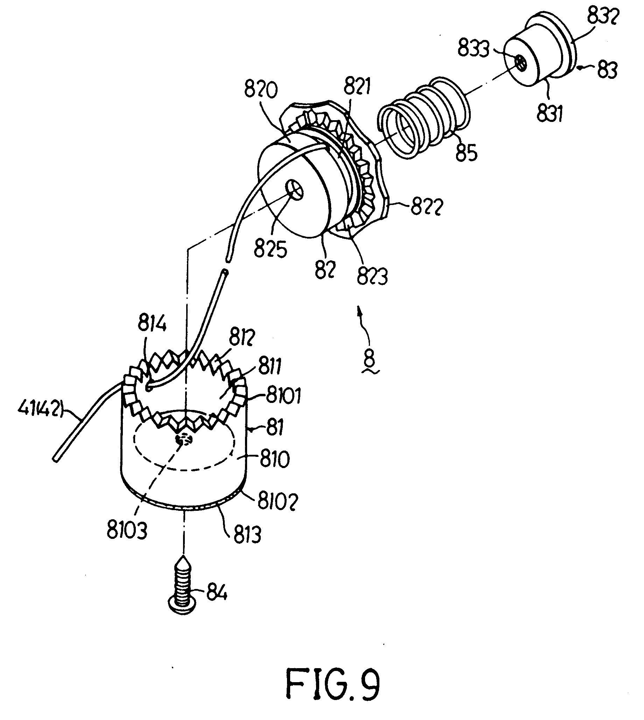

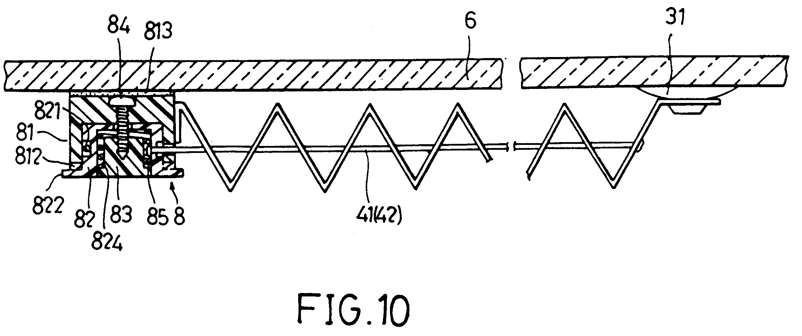

Figure 9 shows a perspective exploded view of another embodiment of a second engaging member 8 of the accordion sun shielding device of this invention. Figure 10 illustrates the second engaging member 8 of the accordion sun shielding device of figure 9 which is mounted to a panel of glass. In figures 9 and 10, the parts corresponding to those in figure 4 are denoted with like numerals. In this embodiment, the second engaging member 8 includes a cap member 81, a hat member 82, a positioning member 83, a screw member 84 and a coiled spring 85.

The cap member 81 has a open end 8101 and a closed end 8102, and a wall 810 defining a cavity 811 therein. The open end 8101 of the cap member 81 has a plurality of teeth 812 extending axially therefrom. The closed end 8102 of the cap member 81 has a central hole 8103 formed therein and a double side adhesive tape 813 adhered the outer face of the closed end 8102 of the cap member 81. The wall 810 of the cap member 81 has an orifice 814 formed therein in order to allow either one of the first and second threads 41, 42 to pass therethrough.

The hat member 82 includes a hollow cylindrical member 820 with an open end and a closed end, and a flange 822 extending radially and outwardly from the open end of the cylindrical member 820. The cylindrical member 820 defines an internal bore 824 therein, as shown in figure 10. The closed end of the cylindrical member 820 has a central aperture 825 formed therein. The cylindrical member 820 further has an annular groove 821 formed circumferentially on the outer surface thereof. The second end of one of the first and second threads 41 and 42 is connected to the bottom face of the annular groove 821, as best illustrated in figure 10. The bottom face of the annular groove 821 has a section of one of the first and second threads 41 and 42 wound therearound. The cylindrical member 820 is received rotatably in the cavity 811 of the cap member 81. The flange 822 has a plurality of teeth 823 extending axially therefrom toward the closed end of the cylindrical member 820.

The positioning member 83 has a cylinder 831 with a first end and a second end, a radial flange 832 extending from the first end of the cylinder 831, and a central threaded hole 833 formed in the second end of the cylinder 831. The positioning member 83 is received slidably in the internal bore 824 of the hat member 82.

The screw member 84 extends through the central hole 8103 of the cap member 81, the central aperture 825 and is threaded into the central threaded hole 833 of the positioning member 83.

The coiled spring 85 sleeves the cylinder 831 of the positioning member 83 in the internal bore 824 of the hat member 82 between the closed end of the hat member 82 and the radial flange 832 of the positioning member 83 in order to urge the teeth 823 of the hat member 82 to engage the teeth 812 of the cap member 81.

It is noted that the length of the threads 41 and 42 to be stretched between the first and second engaging members 31 and 8 can be varied by pulling one of the threads 41 and 42 out of the annular groove 821 of the second engaging member 8 by an excessive force which overcomes the engaging force of the teeth 812 and 823, and by rotating the hat member 82 to wrap a section of one of the threads 41 and 42 around the bottom face of the annular groove 821. The threads 41 and 42 can be stretched in tension because the teeth 812 and 823 are in mesh after the threads 41 and 42 are moved. Therefore, the accordion sun shielding device of this invention can be mounted on glass panels of different lengths by means of adjusting the length of the threads 41 and 42. This increases the applicability of the accordion sun shielding device of this invention.

With this invention thus explained, it is apparent that numerous modifications and variations can be made without departing from the scope and spirit of this invention. It is therefore intended that this invention be limited only as indicated in the appended claims.

## Claims

1. An accordion sun shielding device (2) comprising:
a plurality of elongated accordion plates (21) connected to one another in an juxtaposed relationship and including a leftmost accordion plate (211) and a rightmost accordion plate (212), each of said accordion plates (21) having first and second holes (221, 222) formed respectively adjacent to the end portions of each of said accordion plates (21), said leftmost accordion plate (211) further having at least one aperture (231, 232) formed between said first and second holes (221, 222) of said leftmost accordion plate (211);
two first engaging members (31, 32) connected respectively adjacent to said first and second holes (221, 222) of said rightmost accordion plate (212), said two first engaging members (31, 32) being adapted to be detachably adhered to a panel of glass (6);
two second engaging members (51, 52) adapted to be detachably adhered to a panel of glass (6);
a first thread (41) having a first end and a second end, said first end of said first thread (41) being connected to said rightmost accordion plate (212), and said second end of said first thread (41) being connected to one of said two second engaging members (51, 52), said first thread (41) passing through said first holes (221), said at least one aperture (231, 232), and one of the second holes (222) in said leftmost accordion plate (211); and
a second thread (42) having a first end and a second end, said first end of said second thread (42) being connected to said rightmost accordion plate (212), and said second end of said second thread (42) being connected to the other one of said two second engaging members (51, 52), said second thread (42) passing through said second holes (222), said at least one aperture (231, 232), and one of the first holes (221) in said leftmost accordion plate (211).

2. An accordion sun shielding device as claimed in Claim 1, wherein each of said second engaging members (51, 52) comprises:
a cap member (81) having an open end (8101) and a closed end (8102), and having a wall (810) defining a cavity (811) therein, said open end (8101) of said cap member (81) having a plurality of teeth (812) extending axially therefrom, said closed end (8102) of said cap member (81) having a central hole (8103) formed therein and a double side adhesive tape (813) adhered an outer face of said closed end of said cap member (81), said wall (810) of said cap member (81) having an orifice (814) formed therein in order to allow one of said first and second threads (41, 42) to pass therethrough;
a hat member (82) including a hollow cylindrical member (820) which has an open end and a closed end, and a flange (822) extending radially and outwardly from said open end of said cylindrical member (820), said cylindrical member (820) defining an internal bore (824) therein, said closed end of said cylindrical member (820) having a central aperture (825) formed therein, said cylindrical member (820) further having an annular groove (821) formed circumferentially on an outer surface thereof, said annular groove (821) having a bottom face to which said second end of one of said first and second threads (41, 42) is connected, said bottom face of said annular groove (821) having a section of one of said first and second threads (41, 42) wound therearound, said cylindrical member (820) being received rotatably in said cavity (811) of said cap member (81), said flange (822) having a plurality of teeth (823) extending axially therefrom toward said closed end of said cylindrical member (820);
a positioning member (83) having a cylinder (831) with a first end and a second end, a radial flange (832) extending from said first end of said cylinder (831), and a central threaded hole (833) formed in said second end of said cylinder (831), said positioning member (83) received slidably in said internal bore (824) of said hat member (82);
a screw member (84) extending through said central hole (8103) of said cap member (81), said central aperture (825) and threaded into said central threaded hole (833) of said positioning member (83); and
a coiled spring (85) sleeving said cylinder (831) of said positioning member (83) in said internal bore (824) of said hat member (82) between said closed end of said hat member (82) and said radial flange (832) of said positioning member (83) in order to urge said teeth (823) of said hat member (82) to engage said teeth (812) of said cap member (81).
